# EUROPÄISCHE PATENTSCHRIFT

(11) **EP 0 888 711 B1**
(45) Veröffentlichungstag und Bekanntmachung des Hinweises auf die Patenterteilung: **31.07.2002**
(21) Anmeldenummer: 98110764.2
(22) Anmeldetag: 12.06.1998
(51) Int. Cl.: A01K 35/00, A01K 11/00

(54) **Brieftaubenring**
Ring for competition pigeon
Bague pour pigeon voyageur

(30) Priorität: 01.07.1997 DE 19727926
(43) Veröffentlichungstag der Anmeldung: 07.01.1999
(73) Patentinhaber: Stobbe, Anatoli, 30890 Barsinghausen (DE)
(72) Erfinder: Stobbe, Anatoli, 30890 Barsinghausen (DE)
(74) Vertreter: Patentanwälte Thömen & Körner

(56) Entgegenhaltungen:
- EP-A- 0 485 039
- DE-A- 19 506 754
- DE-U- 9 408 892
- DE-U- 9 419 115

## Beschreibung

Die Erfindung betrifft einen Brieftaubenring mit einem Transponderbehälter nach dem Oberbegriff des Anspruchs 1.

Aus der DE 195 06 754 C2 sind Brieftaubenringe zur Aufnahme eines Transponders bekannt. Diese Brieftaubenringe umfassen eine hohle, einseitig offene Hülse, in die der Transponder eingesetzt werden kann. Die Hülse ist mit dem Brieftaubenring einstückig gefertigt.

Damit ist es möglich, den Transponder bei einer erwachsenen Taube nachträglich anzubringen, wenn diese für Wettkampfzwecke geeignet ist. Der Grund für das nachträgliche Anbringen eines Transponders ist darin zu sehen, daß Transponder relativ teuer sind, so daß nur solche Tauben mit Transpondern versehen werden, die tatsächlich auch zu Wettkampfzwecken eingesetzt werden sollen. Hierbei ist zu beachten, daß nur ein Teil der geschlüpften Tauben sich für Wettkampfzwecke qualifiziert und es daher viel zu teuer wäre, alle Tauben mit einem Transponder zu versehen.

Der Nachteil der bekannten Lösung besteht darin, daß die Brieftaubenringe unter dem Aspekt, daß nur ein kleiner Teil letztlich mit Transpondern ausgestattet wird, materialaufwendig und fertigungsaufwendig sind. Außerdem verschmutzt die Hülse mit der Zeit. Hat sich dann später eine Taube für Wettkampfzwecke qualifiziert und soll der vorsorglich beim jungen Tier aufgesetzte Brieftaubenring nun auch tatsächlich mit einem Transponder ausgestattet werden, so kann dieser aufgrund der Verschmutzung nicht mehr ohne weiteres eingesetzt werden.

Es besteht die Aufgabe, einen Brieftaubenring mit Transponderbehälter so auszubilden, daß der zur Beringung junger Tauben vorgesehene Teil materialsparend gefertigt werden kann und eine spätere Befestigung eines Transponders weniger durch Verschmutzung behindert wird.

Gelöst wird diese Aufgabe mit den kennzeichnenden Merkmalen des Anspruches 1. Vorteilhafte Ausgestaltungen sind den Unteransprüchen entnehmbar.

Der erfindungsgemäße Brieftaubenring mit Transponderbehälter macht es möglich, junggeschlüpfte Tauben mit einem billigen, materialsparenden Ring zu beringen und den relativ teueren Transponder sowie auch den Transponderbehälter erst dann anzubringen, wenn die Taube für die Teilnahme an Wettflügen geeignet ist.

Ausführungsbeispiele werden nachfolgend an Hand der Zeichnungen näher erläutert.

Es zeigen:
- Fig. 1: eine perspektivische Ansicht einer ersten Ausführungsform eines Brieftaubenrings;
- Fig. 2: einen Längsschnitt durch den Brieftaubenring nach Fig. 1;
- Fig. 3: eine Draufsicht auf den Brieftaubenring nach Fig. 1;
- Fig. 4: eine Seitenansicht des Brieftaubenrings nach Fig. 1 mit Blick auf eine Aufnahmevorrichtung für einen Transponderbehälter;
- Fig. 5: eine Draufsicht auf einen Transponderbehälter;
- Fig. 6: eine Seitenansicht eines Transponderbehälters;
- Fig. 7: eine Draufsicht auf den Brieftaubenring nach einer zweiten Ausführungsform und
- Fig. 8: eine Draufsicht auf den Brieftaubenring nach einer dritten Ausführungsform.

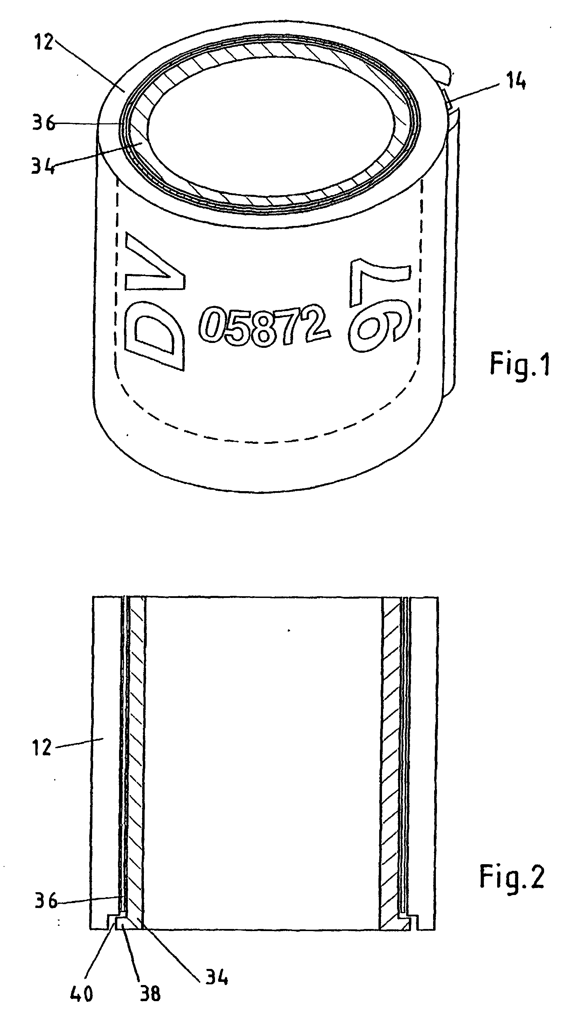

Fig. 1 zeigt ein inneres Ringteil 34, den Geburtsring, dem ein äußeres Ringteil 12 übergestülpt ist. Zumindest im oberen Bereich besteht zwischen den beiden Ringteilen 34, 12 ein Ringspalt bzw. eine ringförmige Tasche, in welche ein bedruckter Papierring 36 eingesetzt werden kann. Dieser Papierring 36 ist mit einem die Taube identifizierenden Aufdruck versehen.

Wie die Schnittdarstellung nach Fig. 2 erkennen läßt, besitzt das innere Ringteil 34 an seiner unteren Stirnseite einen umlaufenden Kragen 38 und das äußere Ringteil 12 eine umlaufende Ringnut 40, in die der Kragen 38 eingreift und so das äußere Ringteil 12 und den Papierring 36 nach unten hin fixiert. Um ein Entfernen dieses Papierrings 36 auch nach oben zu vermeiden, wird in die ringförmige Tasche eine ringförmige Abdeckung unlösbar, beispielsweise durch Einkleben, Einpressen oder Einschweißen eingesetzt. Diese Abdeckung fixiert dann auch das äußere Ringteil 12 gegen Verschiebung nach oben. Sie kann aus Metall oder Kunststoff bestehen. Damit der Papierring 36 bzw. dessen Aufdruck sichtbar ist, besteht das äußere Ringteil 12 aus transparentem Material. Das innere Ringteil 34 kann außer aus Metall auch aus Kunststoff bestehen.

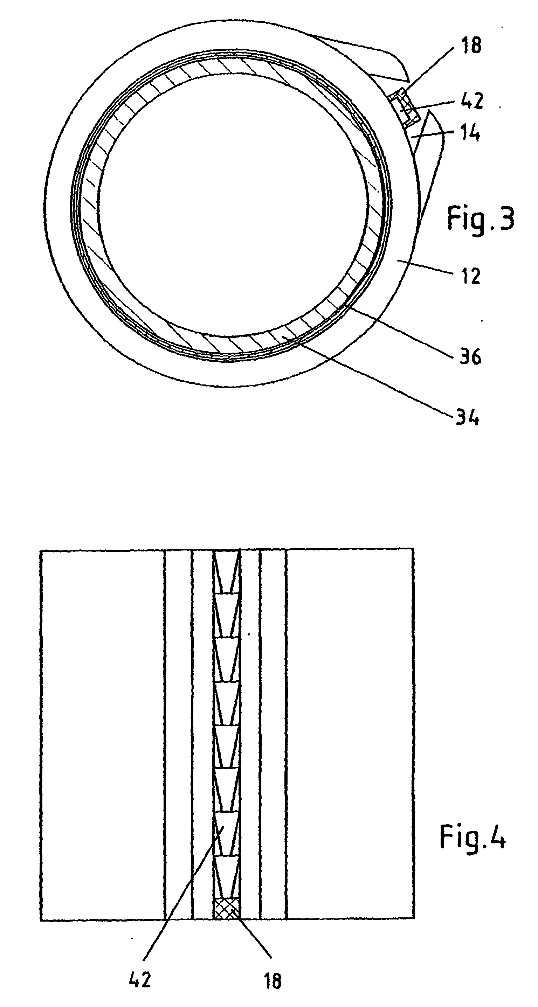

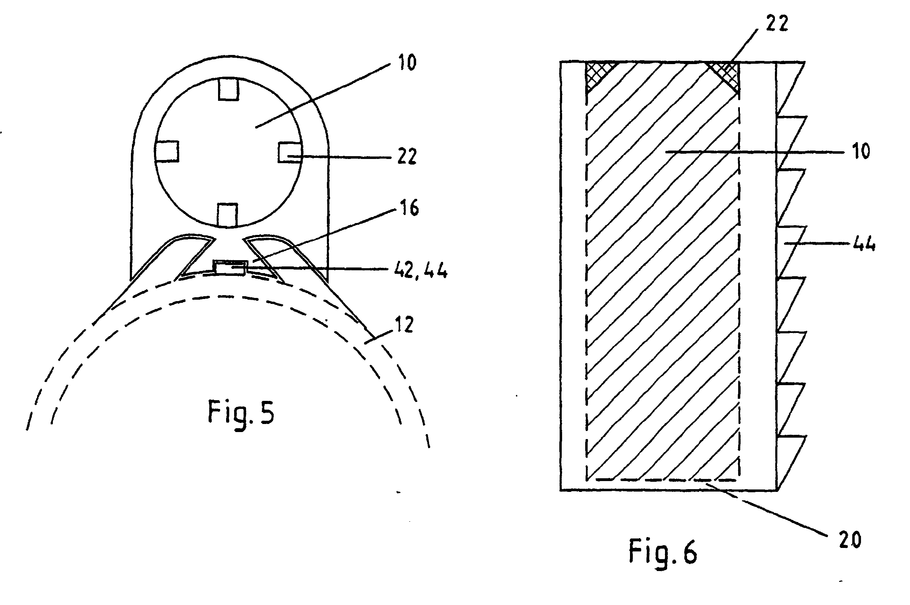

Aus der Draufsicht auf den Brieftaubenring nach Fig. 3 und der Seitenansicht des Brieftaubenrings nach Fig. 4 ist die Anordnung und Ausgestaltung einer Aufnahmevorrichtung für einen Transponderbehälter gemäß Fig. 5 und 6 ersichtlich. Die Aufnahmevorrichtung ist als verriegelbare Nut-Feder-Anordnung mit einer hinterschnittenen Nut 14 am Mantel des äußeren Ringteils 12 und einer an die Nut 14 angepaßten Feder 16 am Mantel des Transponderbehälters 10 ausgebildet. Die Nut 14 erstreckt sich axial über die gesamte Länge des äußeren Ringteils 12. Die Querschnittsform der Nut 14 ist schwalbenschwanzförmig. Eine Verriegelung der Nut-Feder-Anordnung weist an einem Ende der Nut 14 einen Stopper 18 und längs der Nut 14 Rastzähne 42 auf. Die Aufnahmevorrichtung ist dadurch einmal und irreversibel befestigt.

Fig. 5 zeigt eine Draufsicht und Fig. 6 eine Seitenansicht auf den Transponderbehälter 10. Der Transponderbehälter 10 bildet eine hohle Hülse, die an einem Ende einen Stopper 20 und am anderen Ende Rastnasen 22 trägt. Die Rastnasen 22 übergreifen den eingesetzen Transponder und fixieren ihn so zwischen sich und dem unteren Stopper 20 in der Hülse.

An der Mantelseite des Transponderbehälters 10 erstreckt sich axial eine Feder 16, die in die Nut 14 des äußeren Ringteils 12 paßt. Die Feder 16 trägt ebenfalls Rastzähne 44 die zu den Rastzähnen 42 des äußeren Ringteils 12 komplementär sind und zusammen eine ineinandergreifende Rastvorrichtung bilden, die nicht wieder lösbar ist.

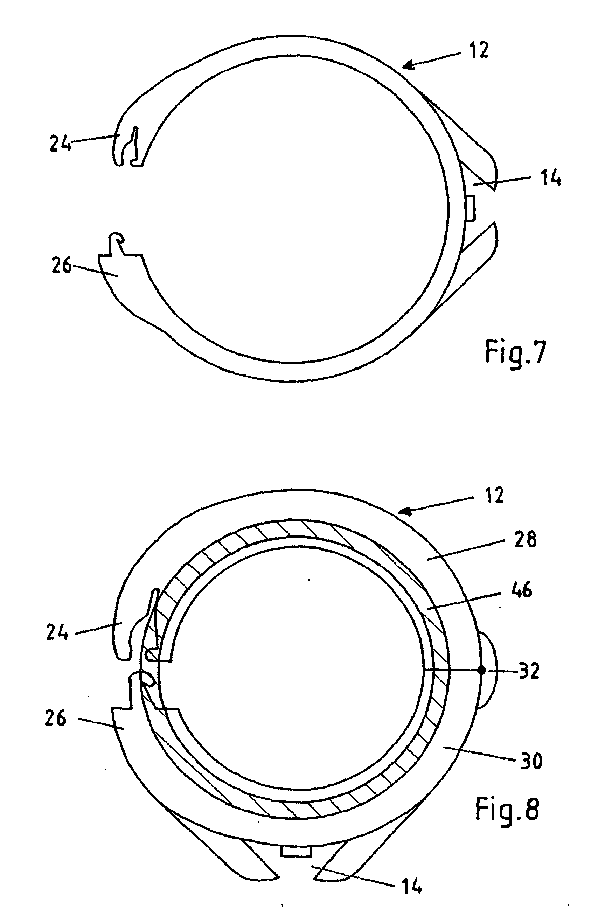

Das äußere Ringteil 12 ist bei der Ausführungsform nach Fig. 1 ein geschlossener Ring. Es kann jedoch auch als offenes Ringteil ausgebildet sein. Hierzu zeigen Fig. 7 und 8 Ringteile 12, die an einer Stelle ihres Umfangs unterbrochen sind. Die Stirnenden 24, 26 sind zu einem nicht wieder lösbaren Rastverschluß zusammensteckbar und können so um einen bereits vorhandenen Geburtsring 46 (Fig. 8) gelegt werden.

Bei der Ausführung nach Fig. 7 besteht das Ringteil 12 aus einem elastischen Material, das sich ausreichend aufbiegen läßt und so ermöglicht, das äußere Ringteil 12 nachträglich über das innere Ringteil 34 zu stülpen. Diese Ausführung ist geeignet, nachträglich angebracht zu werden, wenn der einer jungen Taube aufgesteckte Brieftaubenring später beschädigt werden sollte.

Demgegenüber zeigt Fig. 8 eine Ausführung, bei der das äußere Ringteil 12 aus einem starren Material besteht und zwei Ringsegmente 28, 30 umfaßt, die mittels eines Scharniers 32 gegenseitig schwenkbar sind.

## Patentansprüche

1. Brieftaubenring mit einem Transponderbehälter und einer Aufnahmevorrichtung für den Transponderbehälter (10), wobei der Brieftaubenring (12) am Fuß einer Brieftaube anbringbar ist und bei einer für Wettkampfzwecke qualifizierten Brieftaube im Transponderbehälter (10) ein Transponder befestigbar ist, **dadurch gekennzeichnet, daß** der Transponderbehälter (10) nachträglich mittels einer Aufnahmevorrichtung am Brieftaubenring (12) befestigbar ist.

2. Brieftaubenring mit einem Transponderbehälter nach Anspruch 1, **dadurch gekennzeichnet, daß** die Aufnahmevorrichtung als verriegelbare Nut-Feder-Anordnung mit einer hinterschnittenen Nut (14) und einer an die Nut (14) angepaßten Feder (16) ausgebildet ist.

3. Brieftaubenring mit einem Transponderbehälter nach Anspruch 1 oder 2, **dadurch gekennzeichnet, daß** die Aufnahmevorrichtung eine im Querschnitt schwalbenschwanzförmige Nut (14) und eine an die Nut (14) angepaßte schwalbenschwanzförmige Feder (16) aufweist.

4. Brieftaubenring mit einem Transponderbehälter nach einem der Ansprüche 1 bis 3, **dadurch gekennzeichnet, daß** die Verriegelung der Aufnahmevorrichtung an einem Ende der Nut (14) einen Stopper (18) und längs der Nut (14) und Feder (16) eine ineinandergreifende Rastvorrichtung aufweist.

5. Brieftaubenring mit einem Transponderbehälter nach einem der Ansprüche 1 bis 4, **dadurch gekennzeichnet, daß** der Transponderbehälter (10) eine hohle Hülse bildet, die an einem Ende einen Stopper (20) und am anderen Ende wenigstens eine Rastnase (22) trägt, die den eingesetzen Transponder übergreift.

6. Brieftaubenring nach einem der Ansprüche 1 bis 5, **dadurch gekennzeichnet, daß** der Brieftaubenring (12) an einer Stelle seines Umfangs unterbrochen ist und die Stirnenden (24, 26) zu einem Rastverschluß zusammensteckbar sind.

7. Brieftaubenring nach Anspruch 6, **dadurch gekennzeichnet, daß** der Brieftaubenring (12) aus einem elastischen Material besteht.

8. Brieftaubenring nach Anspruch 6, **dadurch gekennzeichnet, daß** der Brieftaubenring (12) aus einem starren Material besteht und zwei Ringsegmente (28, 30) umfaßt, die mittels eines Scharniers (32) gegenseitig schwenkbar sind.

9. Brieftaubenring nach einem der Ansprüche 1 bis 8, **dadurch gekennzeichnet, daß** der Brieftaubenring einen äußeren Ringteil (12) bildet, der über einen inneren Ringteil (34), vorzugsweise den Geburtsring, gestülpt ist.

10. Brieftaubenring nach Anspruch 9, **dadurch gekennzeichnet, daß** das äußere Ringteil (12) aus einem transparenten Kunststoff besteht.

11. Brieftaubenring nach Anspruch 8 oder 9, **dadurch gekennzeichnet, daß** das innere Ringteil (34) beschriftbar ist.

12. Brieftaubenring nach Anspruch 8 oder 9, **dadurch gekennzeichnet, daß** zwischen dem inneren (34) und äußeren Ringteil (12) eine ringförmige Tasche zur Aufnahme eines Kennzeichnungsstreifens (36) vorgesehen ist.

## Claims

1. Carrier pigeon ring with a transponder container and a reception device for the transponder container (10), in which the carrier pigeon ring (12) can be fitted to the foot of a carrier pigeon, a transponder being fastenable into the transponder container (10) in the case of a carrier pigeon qualified for competition purposes, **characterized in that** the transponder container (10) can be subsequently fastened by means of a reception device to the carrier pigeon ring (12).

2. Carrier pigeon ring with a transponder container according to claim 1, **characterized in that** the reception device is constructed as a lockable groove and tongue arrangement with an undercut groove (14) and a tongue (16) adapted to the groove (14).

3. Carrier pigeon ring with a transponder container according to claim 1 or 2, **characterized in that** the reception device has a cross-sectionally dovetail-shaped groove (14) and a dovetail-shaped tongue (16) adapted to the groove (14).

4. Carrier pigeon ring with a transponder container according to one of the claims 1 to 3, **characterized in that** the locking of the reception device is provided at one end of the groove (14) with a stopper (18) and along the groove (14) and tongue (16) with an interlocking latching device.

5. Carrier pigeon ring with a transponder container according to one of the claims 1 to 4, **characterized in that** the transponder container (10) forms a hollow sleeve carrying at one end a stopper (20) and at the other end at least one latch (22), which engages over the inserted transponder.

6. Carrier pigeon ring according to one of the claims 1 to 5, **characterized in that** the carrier pigeon ring (12) is interrupted at one point along its circumference and the front ends (24, 26) can be assembled to a latching connection.

7. Carrier pigeon ring according to claim 6, **characterized in that** the carrier pigeon ring (12) is made from an elastic material.

8. Carrier pigeon ring according to claim 6, **characterized in that** the carrier pigeon ring (12) is made from a rigid material and comprises two ring segments (28, 30), which can be pivoted against one another by means of a hinge (32).

9. Carrier pigeon ring according to one of the claims 1 to 8, **characterized in that** the carrier pigeon ring forms an outer ring part (12), which is inverted over an inner ring part (34), preferably the birth ring.

10. Carrier pigeon ring according to claim 9, **characterized in that** the outer ring part (12) is made from transparent plastic.

11. Carrier pigeon ring according to claim 8 or 9, **characterized in that** the inner ring part (34) can be inscribed.

12. Carrier pigeon ring according to claim 8 or 9, **characterized in that** between the inner ring part (34) and the outer ring part (12) is provided an annular pocket for receiving an identification strip (36).

## Revendications

1. Bague de pigeon voyageur avec un conteneur pour un transpondeur et un dispositif permettant de recevoir le conteneur à transpondeur (10), la bague de pigeon voyageur (12) pouvant être fixée sur la patte d'un pigeon voyageur et un transpondeur pouvant être fixé dans le conteneur à transpondeur (10) d'un pigeon voyageur qualifié pour participer à des concours, **caractérisée en ce que** le conteneur à transpondeur (10) peut être fixé ultérieurement, au moyen d'un dispositif de réception, sur la bague de pigeon voyageur (12).

2. Bague de pigeon voyageur avec un conteneur à transpondeur suivant la revendication 1, **caractérisée en ce que** le dispositif de réception est conçu comme un dispositif à languette et rainure pouvant être verrouillé avec une rainure contre-dépouillée (14) et une languette (16) adaptée à la rainure (14).

3. Bague de pigeon voyageur avec un conteneur à transpondeur suivant la revendication 1 ou 2, **caractérisée en ce que** le dispositif de réception présente une rainure (14) à section transversale en queue d'aronde et une languette (16) en forme de queue d'aronde adaptée à la rainure (14).

4. Bague de pigeon voyageur avec un conteneur à transpondeur suivant la revendication 1 à 3, **caractérisée en ce que** le verrouillage du dispositif de réception présente à une extrémité de la rainure (14) un taquet (18) et, le long de la rainure (14) et de la languette (16), un dispositif à encoches qui s'emboîtent.

5. Bague de pigeon voyageur avec un conteneur à transpondeur suivant la revendication 1 à 4, **caractérisée en ce que** le conteneur à transpondeur (10) forme une douille creuse qui porte un taquet (20) à une extrémité et au moins un nez d'arrêt (22) qui recouvre le transpondeur inséré.

6. Bague de pigeon voyageur selon une des revendications 1 à 5, **caractérisée en ce que** la bague de pigeon voyageur (12) est interrompue à un endroit de sa circonférence et que les extrémités frontales (24, 26) peuvent s'emboîter pour former une fermeture à verrouillage.

7. Bague de pigeon voyageur suivant la revendication 6, **caractérisée en ce que** la bague de pigeon voyageur (12) est en matière élastique.

8. Bague de pigeon voyageur suivant la revendication 6, **caractérisée en ce que** la bague de pigeon voyageur (12) est en matériau rigide et comprend deux segments à bagué (28, 30) qui pivotent l'un par rapport à l'autre grâce à une charnière (32).

9. Bague de pigeon voyageur suivant une des revendications 1 à 8, **caractérisée en ce que** la bague de pigeon voyageur est composée d'une partie de bague extérieure (12) qui est emboutie par retournement sur une partie de bague intérieure (34), de préférence, sur la bagué de naissance.

10. Bague de pigeon voyageur suivant la revendication 9, **caractérisée en ce que** la partie de bague extérieure (12) est en matière artificielle transparente.

11. Bague de pigeon voyageur suivant la revendication 8 ou 9, **caractérisée en ce que** la partie de bague intérieure (34) peut recevoir une inscription.

12. Bague de pigeon voyageur suivant la revendication 8 ou 9, **caractérisée en ce qu'**une poche annulaire destinée à recevoir un ruban d'identification (36) est prévue entre la partie de bague intérieure (34) et la partie de bague extérieure (12).
